(19) Europäisches Patentamt / European Patent Office / Office européen des brevets

(11) **EP 3 926 712 A1**

(12) **EUROPEAN PATENT APPLICATION**

(43) Date of publication:
**22.12.2021 Bulletin 2021/51**

(51) Int Cl.:
***H01M 4/131*** *(2010.01)*

(21) Application number: **21179467.2**

(22) Date of filing: **15.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2020 KR 20200074439**

(71) Applicant: **Samsung SDI Co., Ltd.**
**Yongin-si, Gyeonggi-do 17084 (KR)**

(72) Inventors:
• **CHAE, Youngjoo**
**17084 Yongin-si (KR)**

• **KIM, Youngki**
**17084 Yongin-si (KR)**
• **KIM, Jongmin**
**17084 Yongin-si (KR)**
• **LEE, Soonrewl**
**17084 Yongin-si (KR)**
• **HONG, Soonkie**
**17084 Yongin-si (KR)**

(74) Representative: **Shearman, James Ward**
**Marks & Clerk LLP**
**15 Fetter Lane**
**London EC4A 1BW (GB)**

(54) **NICKEL-BASED COMPOSITE POSITIVE ELECTRODE ACTIVE MATERIAL FOR LITHIUM SECONDARY BATTERY, METHOD OF PREPARING THE SAME, AND LITHIUM SECONDARY BATTERY INCLUDING POSITIVE ELECTRODE INCLUDING THE SAME**

(57)     A nickel-based composite positive electrode active material for a lithium secondary battery is in the form of secondary particles each comprised of a plurality of primary particles, each primary particle of the plurality of primary particles having a core portion formed of a nickel-based lithium metal oxide having a layered phase and a surface portion positioned on the core portion, wherein the surface portion has a spinel phase and the layered phase. A method of preparing the nickel-based composite active material, and a lithium secondary battery containing a positive electrode including the nickel-based composite active material are also provided.

FIG. 1B

EP 3 926 712 A1

**Description**

**BACKGROUND**

**1. Field**

One or more aspects of embodiments of the present disclosure relate to a nickel-based composite positive electrode active material for a lithium secondary battery, a method of preparing the same, and a lithium secondary battery including a positive electrode including the same.

**2. Description of Related Art**

The advancement of portable electronic devices and communication devices highlights a great need for the development of lithium secondary batteries having high energy density.

In order to increase the capacity of a positive electrode active material of a lithium secondary battery, a positive electrode active material into which excess lithium is introduced may be utilized. However, such a positive electrode active material including excess lithium may have increased $CO_2$ gas generation caused by side reactions between residual lithium and an electrolyte, and may have decreased lithium diffusion rates and increased cation mixing due to enlarged positive electrode active material particles, resulting in the breakdown of the positive electrode active material structure, such that improvements in this regard are desired.

**SUMMARY**

One or more aspects of embodiments of the present disclosure are directed toward a nickel-based composite positive electrode active material for a lithium secondary battery having excellent capacity characteristics and/or improved charge and discharge efficiency and/or ion conductivity.

One or more aspects of embodiments of the present disclosure are directed toward a method of preparing the nickel-based composite positive electrode active material for a lithium secondary battery.

One or more aspects of embodiments of the present disclosure are directed toward a lithium secondary battery having improved efficiency and lifespan by including a positive electrode including the nickel-based composite positive electrode active material.

Additional aspects will be set forth in part in the description that follows and, in part, will be apparent from the description, or may be learned by practice of the presented embodiments of the disclosure.

One or more embodiments of the present disclosure provide a nickel-based composite positive electrode active material for a lithium secondary battery, the nickel-based composite positive electrode active material including (being in the form of) secondary particles each comprised of a plurality of primary particles, wherein the plurality of primary particles each include a core portion formed of a nickel-based lithium metal oxide having a layered phase, and a surface portion positioned on the core portion, the surface portion including a composite structure including a spinel phase and the layered phase.

One or more embodiments of the present disclosure provide a method of preparing a nickel-based composite positive electrode active material for a lithium secondary battery, including:

mixing a nickel-based composite positive electrode active material precursor with a lithium precursor, and performing a primary heat treatment to obtain a first nickel-based active material; and
mixing a second nickel-based active material having a molar ratio (Li/Me) of lithium metal (Li) to metals other than Li (Me) of less than 1 with the first nickel-based active material, and performing a secondary heat treatment to obtain the nickel-based composite positive electrode active material,
wherein a molar ratio (Li/Me) of lithium in the lithium precursor to metals other than Li (Me) of the nickel-based composite positive electrode active material precursor (the total metals of the nickel-based composite positive electrode active material precursor other than lithium) is greater than 1.0, and
the primary heat treatment is performed at a higher temperature than the secondary heat treatment.

One or more embodiments of the present disclosure provide a lithium secondary battery containing a positive electrode including the nickel-based composite positive electrode active material for a lithium secondary battery.

At least some of the above and other features of the invention are set out in the claims.

**BRIEF DESCRIPTION OF THE DRAWINGS**

The above and other aspects, features, and advantages of certain embodiments of the disclosure will be more apparent from the following description taken in conjunction with the accompanying drawings, in which:

FIG. 1A is a view schematically showing a primary particle structure of a first nickel-based active material obtained after performing a primary heat treatment in a method according to an embodiment.
FIG. 1B shows a primary particle structure of a nickel-based composite positive electrode active material according to an embodiment.
FIG. 1C shows a nickel-based composite positive electrode active material structure according to an embodiment.
FIG. 2A is a transmission electron microscope (TEM) image showing a surface portion of a first nickel-based active material obtained after performing the primary heat treatment in a method according to an embodiment.
FIG. 2B is an enlarged view of region A corresponding to a layered phase of FIG. 2A.
FIG. 2C is an enlarged view of region B corresponding to an OLO phase structure of FIG. 2A.
FIG. 3A shows results of transmission electron microscope analysis of a surface portion of a nickel-based composite positive electrode active material obtained according to Example 1.
FIGS. 3B-3D show results of analyzing points D, E, and F of FIG. 3A, respectively, utilizing fast Fourier transform (FFT)-TEM.
FIGS. 4A-5C show TEM images of the nickel-based composite positive electrode active material of Example 1.

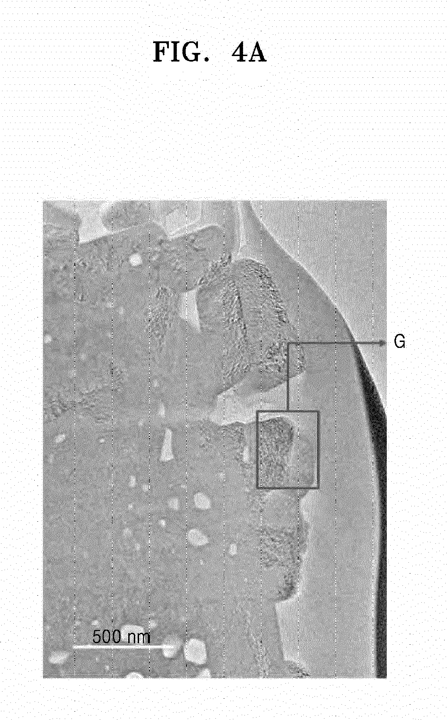

FIG. 4A shows TEM measurement results of the nickel-based composite positive electrode active material obtained according to Example 1.

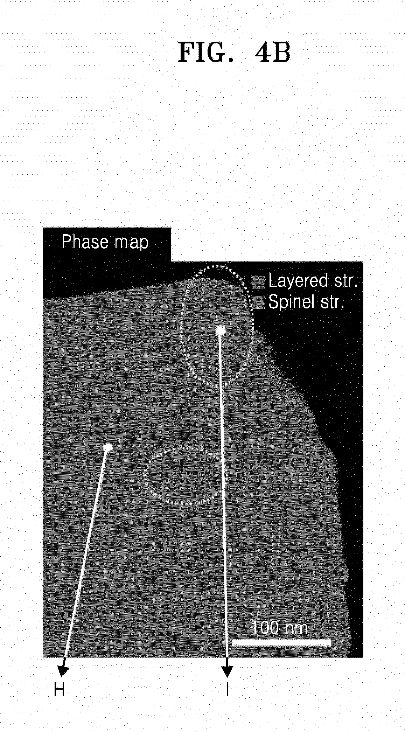

FIG. 4B is an enlarged view and a phase map of region G in FIG. 4A.

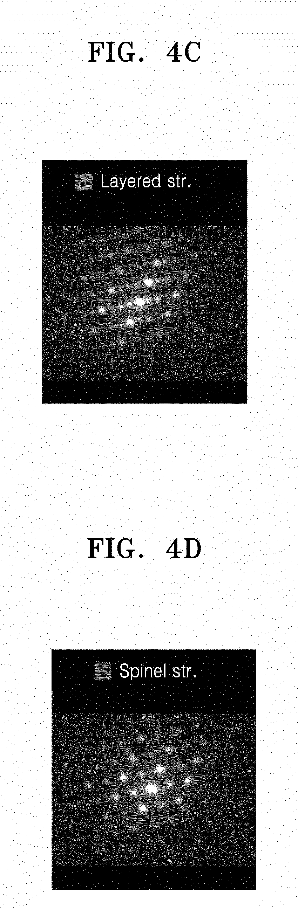

FIGS. 4C and 4D show results of analyzing points H and I of FIG. 4B, respectively, utilizing FFT-TEM.

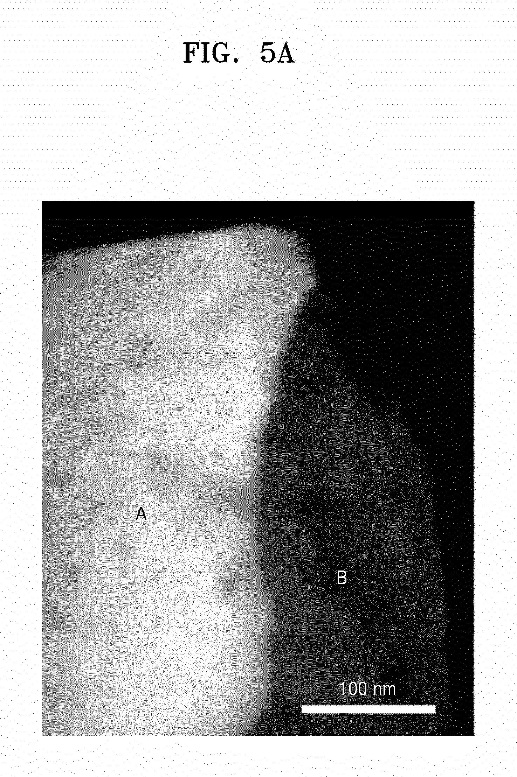

FIG. 5A shows an alternate image of the area in FIG. 4B.

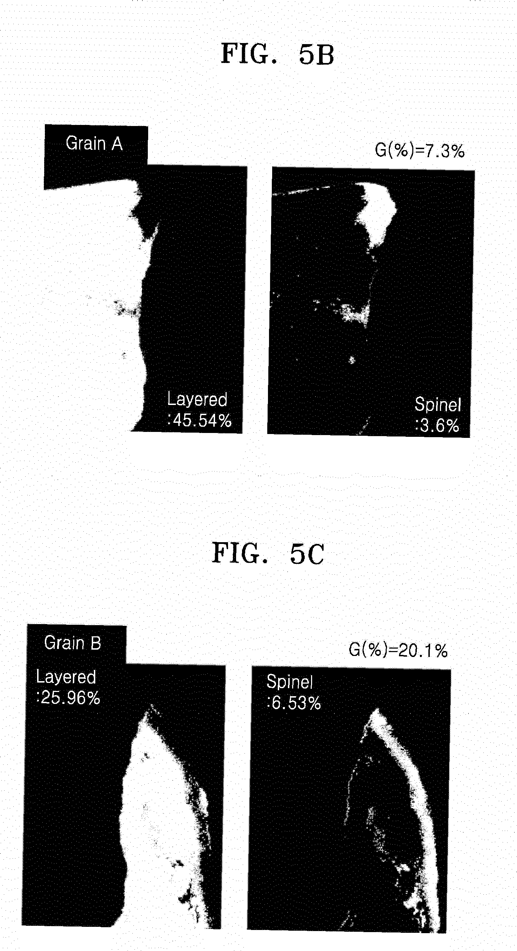

FIGS. 5B and 5C show phases of grain A and grain B of FIG. 5A, respectively.

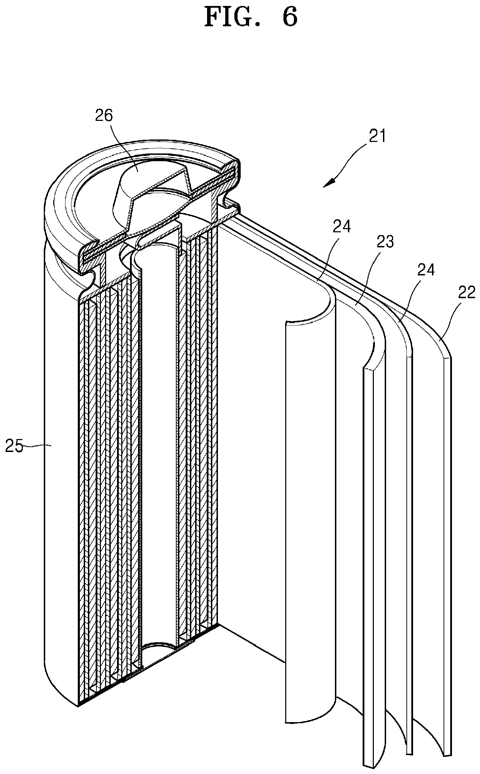

FIG. 6 schematically shows a lithium secondary battery structure according to an embodiment.

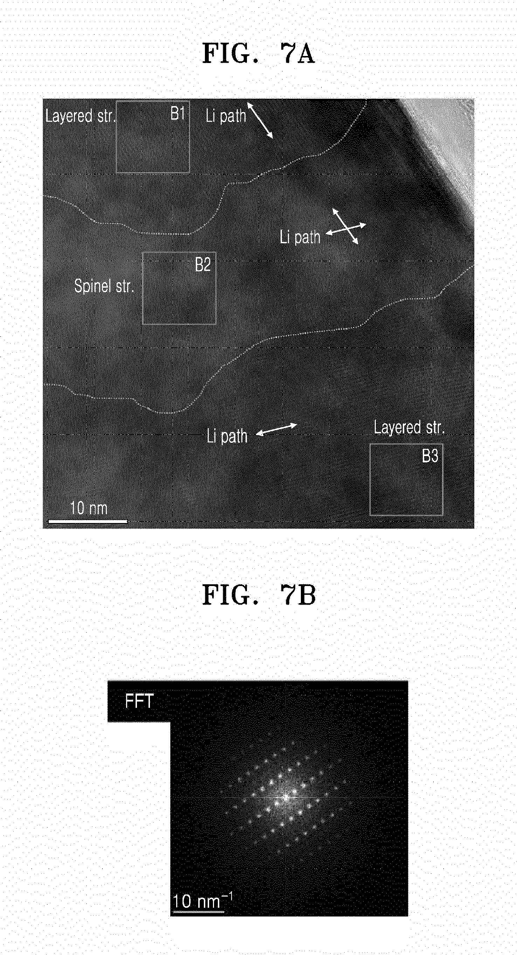

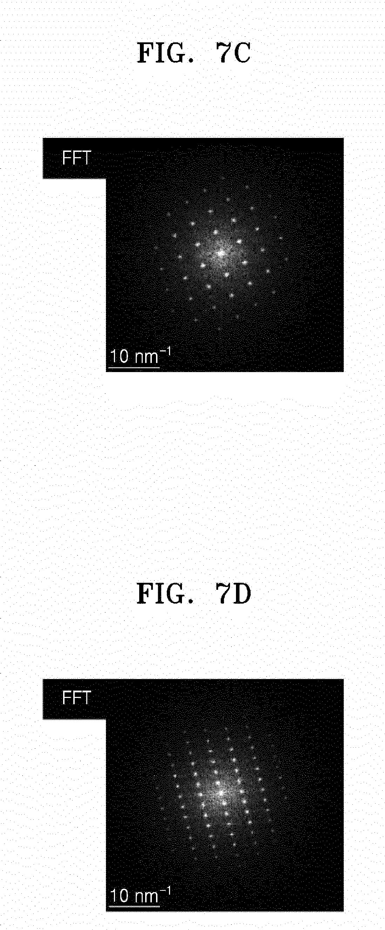

FIG. 7A shows results of transmission electron microscope analysis of a surface portion of a nickel-based composite positive electrode active material obtained according to Example 1.
FIGS. 7B-7D show results of analyzing regions B1, B2, and B3 of FIG. 7A, respectively, utilizing fast Fourier transform (FFT)-TEM.

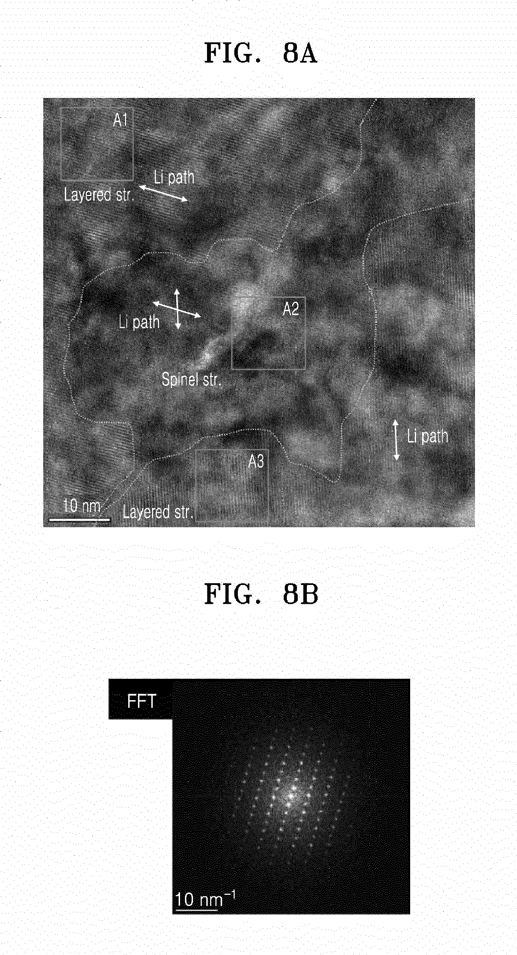

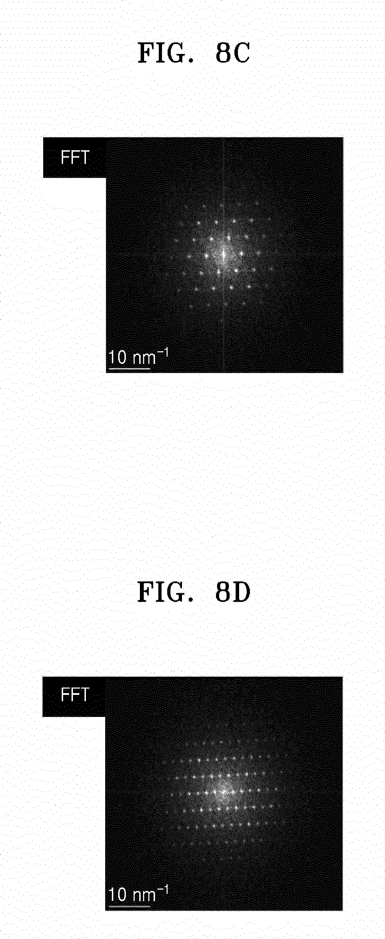

FIG. 8A shows results of transmission electron microscope analysis of one area of a core portion of a nickel-based composite positive electrode active material obtained according to Example 1.
FIGS. 8B-8D show results of analyzing regions A1, A2, and A3 of FIG. 8A, respectively, utilizing fast Fourier transform (FFT)-TEM.

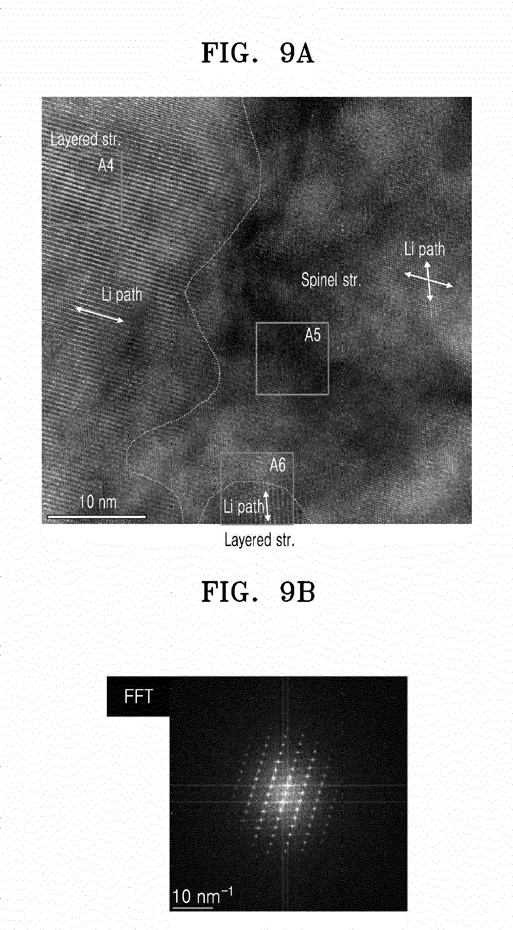

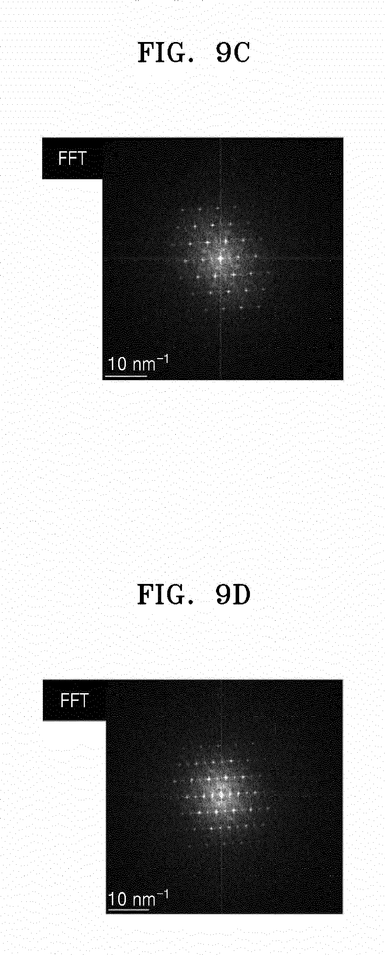

FIG. 9A shows results of transmission electron microscope analysis of other areas of a core portion of a nickel-based composite positive electrode active material obtained according to Example 1.
FIGS. 9B-9D show results of analyzing regions A4, A5, and A6 of FIG. 9A, respectively, utilizing fast Fourier transform (FFT)-TEM.

**DETAILED DESCRIPTION**

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described below with reference to the drawings, to explain aspects of the present description. As used herein, the term "and/or" includes any and all combinations of one or more of the associated listed items. Expressions such as "at least one of," "one of," and "selected from," when preceding a list of elements, modify the entire list of elements and do not modify the individual elements of the list.

As used herein, the singular forms "a," "an," and "the" are intended to include the plural forms as well, unless the context clearly indicates otherwise. It will be further understood that the terms "includes," "including," "comprises," and/or "comprising," when used in this specification, specify the presence of stated features, steps, operations, elements, and/or components, but do not preclude the presence or addition of one or more other features, steps, operations, elements, components, and/or groups thereof. Further, the use of "may" when describing embodiments of the present disclosure refers to "one or more embodiments of the present disclosure".

As used herein, the terms "spinel phase" and "spinel structure" may be interchangeably used to refer to a material having a spinel-type crystal lattice. As used herein, the terms "layered phase" and "layered structure" may be interchangeably used to refer to a material having a layered-type crystal lattice, for example, a lattice in the $\alpha$-NaFeO$_2$

space group.

Hereinafter, a nickel-based composite positive electrode active material for a lithium secondary battery, a method of preparing the nickel-based composite active material, and a lithium secondary battery containing a positive electrode including the nickel-based composite active material will be described in more detail with reference to the accompanying drawings.

One or more embodiments of the present disclosure provide a nickel-based composite positive electrode active material for a lithium secondary battery, the nickel-based composite positive electrode active material being in the form of secondary particles each comprised of a plurality of primary particles, wherein each primary particle of the plurality of primary particles includes a core portion formed of a nickel-based lithium metal oxide having a layered phase, and a surface portion positioned on the core portion, the surface portion including a composite structure including a spinel phase and the layered phase.

In the surface portion, two or more phases having different orientations in one particle may include, for example, a spinel phase and a layered phase.

The term "surface portion" refers to an area within at about 500 nm or less, about 300 nm or less, about 200 nm or less, or about 100 nm or less from an outermost surface of the primary particles of the nickel-based composite positive electrode active material, and having a spinel phase and a layered phase included and present together. The spinel phase may be partially exposed on the surface portion of the nickel-based composite positive electrode active material, and may be found through transmission electron microscope analysis. When such a surface portion is included, lithium diffusion may be relatively easy, compared to when only a layered phase or a spinel phase present in one particle.

In order to increase the capacity of a positive electrode active material, a method of introducing excess lithium may be utilized. However, this method may increase $CO_2$ gas generation caused by side reactions between residual lithium and an electrolyte (due to an increase in residual lithium in the positive electrode active material), and may reduce lithium diffusion rates due to increased cation mixing and/or enlarged particles.

A nickel-based composite positive electrode active material according to embodiments of the present disclosure may have improved ionic conductivity compared to related art materials and methods by controlling cation mixing at a surface of the positive electrode active material, despite the introduction of excess lithium into the positive electrode active material.

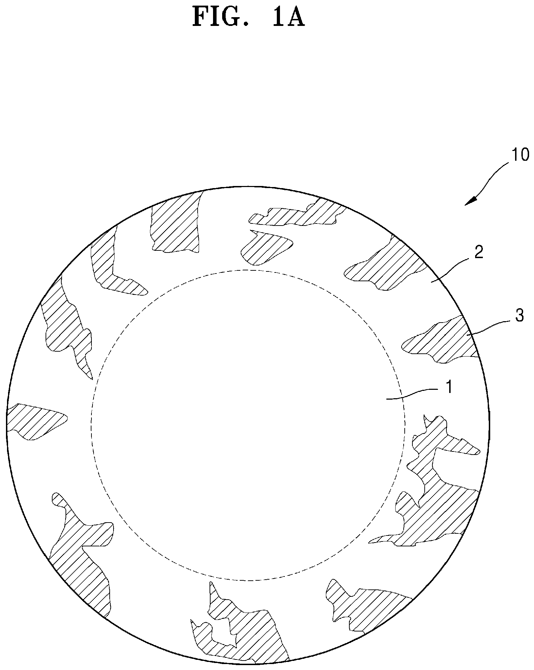

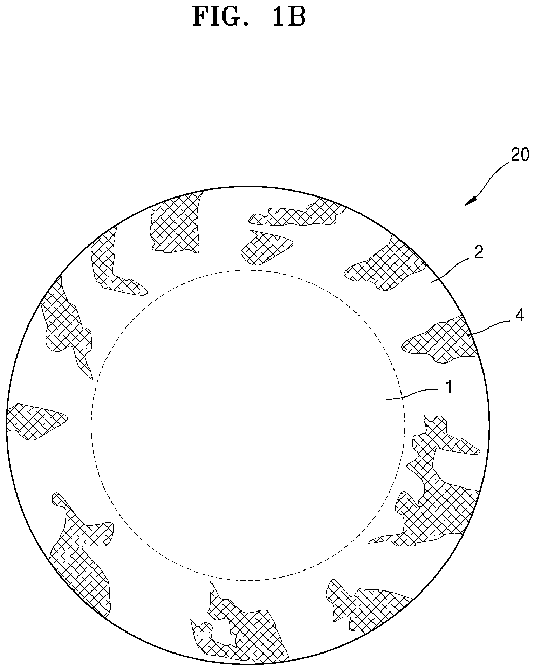

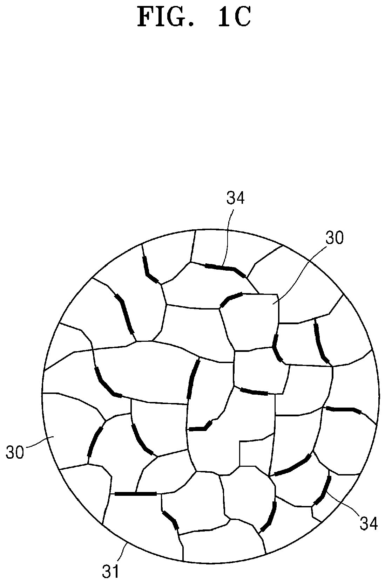

FIG. 1A schematically shows a primary particle structure included in a first nickel-based active material obtained after performing a primary heat treatment in preparing a nickel-based composite positive electrode active material according to an embodiment, and FIG. 1B shows a primary particle structure of a nickel-based composite positive electrode active material according to an embodiment. FIG. 1C shows a structure of a nickel-based composite positive electrode active material according to an embodiment.

A nickel-based composite positive electrode active material 20 for a lithium secondary battery according to an embodiment includes a core portion 1 and a surface portion 2 positioned on the core portion 1 as shown in FIG. 1B, and the surface portion 2 includes a composite structure having a spinel phase and a layered phase. For example, the surface portion 2 may include two or more types (kinds) of phase structures (phases) having different orientations (e.g., having different paths for Li+ diffusion). In this case, a layered phase may be present in the area where a spinel phase 4 is absent in the surface portion 2. In the surface portion 2, the spinel phase 4 may be present in the form of an island(s).

In the process of preparing the nickel-based composite positive electrode active material 20 for a lithium secondary battery, a randomly generated (e.g., randomly distributed) overlithiated oxide (OLO) phase 3 including residual Li is obtained on the surface portion 2 of the first nickel-based active material 10 after the primary heat treatment, as shown in FIG. 1A. Subsequently, a secondary heat treatment is performed on the first nickel-based active material 10 to convert the OLO phase 3 into the spinel phase 4, and the spinel phase 4 is randomly present (e.g., randomly distributed) as shown in FIG. 1B. According to another embodiment, the spinel phase 4 may be regularly present (e.g., regularly distributed).

A spinel phase has a three-dimensional structure (e.g., repeating structure) compared to a layered phase. Accordingly, a nickel-based active material containing the spinel phase may enable easier (e.g., faster) diffusion of lithium compared to the layered nickel-based active material, thereby providing further improved high rate properties in a lithium secondary battery employing a positive electrode containing the nickel-based active material. In addition, while a nickel-based active material only having a spinel phase may allow easier formation of a NiO-phase structure, which can cause deterioration in the properties of the nickel-based active material, the nickel-based active material according to an embodiment has a structure having a layered phase as a base and a discontinuously present spinel phase to allow easier diffusion of lithium (e.g., without, or with reduced levels of the NiO-phase-related deterioration).

The deterioration of properties of the nickel-based active material due to the formation of the NiO-phase structure may be explained as follows.

In the positive electrode active material having a layered phase, the cubic structure of NiO may block or impede the migration of Li. In addition, divalent Ni has a similar ionic radius to Li, which can cause an increase in Li-Ni cation exchange, resulting in a decrease in capacity.

The structure having the spinel phase 4 and the layered phase together on the surface portion 2 may be, for example, a structure in which the spinel phase is arranged in (over or on) a layered matrix (e.g., a matrix including the layered phase). In the disclosure, the term "layered matrix" may refer to a composite structure including the layered phase, and the matrix refers to a substantially continuous structure (e.g., a single continuous body) as opposed to (compared to) an island structure or island(s) (e.g., separate islands). When the spinel phase is substantially continuously dispersed and arranged as an island shape (e.g., dispersed as a plurality of island shapes in and/or over the continuous area of the matrix), cation mixing may be reduced, ionic conductivity may be improved, and particularly, high rate properties may be enhanced. In some embodiments, the substantially continuous dispersion and arrangement of the spinel phase 4 in the surface portion 2 as described above may enable a reduction in resistance compared to the cases in which the spinel phase 4 is discontinuously arranged, only the layered phase is formed, or the layered phase and the spinel phase 4 are simply mixed together. As a result, easier diffusion of lithium is enabled to improve ion conductivity, and domains with layered phases having different orientations are formed in particles and a spinel phase that connects the domains is formed to cause reduction in cation mixing, resulting in a significant improvement in the high rate properties. The nickel-based composite positive electrode active material may have excellent capacity.

In the nickel-based composite positive electrode active material of the present disclosure, a spinel phase may be included in the primary particles of a nickel-based lithium metal oxide having a layered phase. The spinel phase may be randomly dispersed and arranged on a surface portion and/or in a core portion of the nickel-based active material. In the core portion, the spinel phase may be present in the form of an island(s) (e.g., a plurality of islands).

The amount of the spinel phase present in the core portion of the nickel-based composite positive electrode active material may be less than the amount of the spinel phase present in the surface portion.

In the present disclosure, the definition of the term "core portion" of a nickel-based composite positive electrode active material will be described.

The terms "core portion" and "surface portion" refer to inner and outer (e.g. distal) regions of the particle, respectively, where the regions may be based on the area where the volume becomes the same when divided by the same ratio in all directions from the center of the nickel-based composite positive electrode active material to the surface thereof (e.g., defined as a fraction of the total volume of the particle, or defined as the volume encompassed within a particular portion of the particle radius). In some embodiments, the core portion may be, for example, about 10 volume% to about 90 volume%, about 20 volume% to about 80 volume%, about 30 volume% to about 70 volume%, about 40 volume% to about 60 volume%, for example, 50 volume%, with respect to the total volume of the nickel-based composite positive electrode active material, and an outer portion (e.g. surface portion) refers to the remaining area.

In some embodiments, the term "core portion" refers to, with respect to the total volume from the center to a surface of the nickel-based composite positive electrode active material, an area of 50 volume% to 70 volume% from the center, for example, 60 volume%, or refers to, with respect to the total distance between the center and the surface of the nickel-based composite positive electrode active material, the area other than a region within 500nm or less (outer region) from the outermost end (e.g., surface) of the nickel-based composite positive electrode active material. According to an embodiment, the surface portion may be a region within about 500 nm or less, about 300 nm or less, about 100 nm or less, about 70 nm or less, about 50 nm or less, about 30 nm or less, about 20 nm or less, about 10 nm or less, or about 5 nm or less from the outermost end (surface) of the nickel-based composite positive electrode active material. According to another embodiment, the surface portion may be about 0.01 nm to about 500 nm, about 0.01 nm to about 300 nm, about 0.01 nm to about 100 nm, about 0.01 nm to about 70 nm, about 0.01 nm to about 50 nm, about 0.01 nm to about 30 nm, about 0.01 nm to about 20 nm, about 0.01 nm to about 10 nm, or about 0.01 nm to about 5 nm from the outermost end (surface) of the nickel-based composite positive electrode active material.

According to another embodiment, the surface portion of the nickel-based composite positive electrode active material may be, for example, a region within about 100 nm from a surface of the nickel-based composite positive electrode active material.

The amount of the spinel phase in a region within about 100 nm, for example a region within about 50 nm, for example a region within 20 nm from the surface portion of the nickel-based composite positive electrode active material, for example from the surface of the nickel-based composite positive electrode active material, is about 70 parts by weight or less, about 50 parts by weight or less, about 30 parts by weight or less, about 15 parts by weight or less, for example about 5 parts by weight to about 15 parts by weight, with respect to 100 parts by weight of the total weight of the spinel phase and the layered phase. The spinel phase present on the surface of the nickel-based composite positive electrode active material may be present in the form of an island(s). Here, the total weight of the spinel phase and the layered phase refers to the total weight of the spinel phase and the layered phase in the surface portion of the primary particle.

In a composite positive electrode active material, the amount of the spinel phase contained in the primary particles may have a concentration gradient in which the amount thereof increases in a direction towards the surface from the center of the secondary particles.

According to an embodiment, the core portion further includes the spinel phase, and in a nickel-based composite positive electrode active material, the amount of the spinel phase included in the primary particles may have a concentration gradient in which the amount thereof increases in a direction towards the surface from the center of the primary particles of the nickel-based composite positive electrode active material.

At least one of the spinel phase or the layered phase may include a structure having different orientations (e.g., may be present in a plurality of domains).

The spinel phase present in the core portion and/or the surface portion of the nickel-based composite positive electrode active material may form a spinel bridge zone connecting the layered phase (e.g., different domains of the layered phase). In this case, the layered phase connected through the spinel phase may include a layered phase having different orientations.

A nickel-based composite positive electrode active material for a lithium secondary battery includes primary particles wherein each of the primary particles comprises a core portion formed of a nickel-based lithium metal oxide having a layered phase. The nickel-based composite positive electrode active material and the nickel-based lithium metal oxide may include secondary particles formed of agglomerates of at least two or more primary particles. A grain boundary is present between the primary particles of the secondary particles.

As shown in FIG. 1C, a spinel phase 34 may be included in the grain boundary area of the nickel-based lithium metal oxide primary particles 30 in the secondary particles 31. When the spinel phase 34 is present between (e.g., in) the grain boundary, easier diffusion of lithium may occur, and accordingly, high rate properties may be further improved.

The spinel phase 34 may be present in the form of an island(s).

The nickel-based lithium metal oxide primary particles 30 are the same as the primary particles 20 of the nickel-based composite positive electrode active material shown in FIG. 1B.

In the nickel-based composite positive electrode active material according to an embodiment, the amount of the spinel phase may be about 0.1 parts by weight to about 30 parts by weight with respect to 100 parts by weight of the total weight of the layered phase and the spinel phase. When the amount of the spinel phase is within the above range, a nickel-based composite positive electrode active material having improved ionic conductivity may be obtained. Here, the total weight of the spinel phase and the layered phase refers to the total weight of the spinel phase and the layered phase in the primary particle as a whole.

The nickel-based composite positive electrode active material according to an embodiment may further include a compound containing at least one selected from titanium (Ti), zirconium (Zr), magnesium (Mg), barium (Ba), boron (B), and aluminium (Al). The compound containing at least one selected from titanium, zirconium, magnesium, barium, boron, and aluminium may be, for example, titanium oxide, zirconium oxide, magnesium oxide, barium carbonate, boric acid, aluminium oxide, etc.

The amount of the compound containing at least one selected from titanium, zirconium, magnesium, barium, boron, and aluminium may be about 0.0001 parts by weight to about 10 parts by weight, about 0.0001 parts by weight to about 1 part by weight, or about 0.0005 parts by weight to about 0.01 parts by weight, with respect to 100 parts by weight of a nickel-based active material. The compound containing at least one selected from titanium, zirconium, magnesium, barium, boron, and aluminium may be contained on the surface of the nickel-based composite positive electrode active material and may be present discontinuously, and for example may be in a spinel phase.

According to an embodiment, the presence and distribution of the compound containing at least one selected from titanium, zirconium, magnesium, barium, boron, and aluminium may be found (analyzed) through electron probe micro-analysis (EPMA).

The nickel-based composite positive electrode active material according to an embodiment may be represented by Formula 1.

$$\text{Formula 1} \qquad Li_a(Ni_{1-x-y-z}Co_xMn_yM_z)O_{2\pm\alpha1}$$

In Formula 1, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$0.95 \le a \le 1.3$, $0.3 \le (1-x-y-z)<1$, $0<x<1$, $0 \le y<1$, $0 \le z<1$, and $0 \le \alpha1 \le 0.1$ are satisfied.

In Formula 1, the sum of the mole fractions of Ni, Co, Mn and M is 1.

The amount of nickel in Formula 1 may be, for example, about 30 mol% to about 95 mol%, about 50 mol% to about 95 mol%, about 50 mol% to about 90 mol%, or about 55 mol% to about 85 mol% based on 100 mol% of the total amount of Ni, Co, Mn and M.

In the nickel-based composite positive electrode active material of Formula 1, the amount of nickel may be may be greater than the respective amounts of the metals other than Li (Me), that is, Ni, Co, Mn and M in Formula 1. Herein, the term "metals other than Li(Me)" relates to Ni, Co, Mn and M in Formulae 1 and 2, Ni, Co, Mn and M' in Formula 3, and Ni, Co, Mn and M" in Formula 4. As such, when a nickel-based composite positive electrode active material having a large amount of nickel is utilized, in particular when a lithium secondary battery employing a positive electrode including the same is utilized, lithium diffusivity may be high, conductivity may be good, and higher capacity may be obtainable at the same voltage.

For example, in Formula 1, $0.5 \leq (1-x-y-z) \leq 0.95$, and $0 < x \leq 0.3$ may be satisfied, and $0 \leq y \leq 0.5$ and $0 \leq z \leq 0.05$ may be satisfied. In some embodiments in Formula 1, for example, a is 1 to 1.1, x is 0.1 to 0.3, and y is 0.05 to 0.3. According to an embodiment, in Formula 1, z is 0.

The nickel-based composite positive electrode active material may be $LiNi_{0.6}Co_{0.2}Mn_{0.2}O_2$, $LiNi_{0.5}Co_{0.2}Mn_{0.3}O_2$, $LiNi_{1/3}Co_{1/3}Mn_{1/3}O_2$, or $LiNi_{0.8}Co_{0.1}Mn_{0.1}O_2$.

The nickel-based composite positive electrode active material of Formula 1 may have a structure in which primary particles agglomerate to form spherical secondary particles, and the secondary particles may have an average particle diameter of about 5 μm to about 25 μm.

When the secondary particle is spherical, the term "average particle diameter" of the secondary particles may be, a median diameter (D50), and when the secondary particle is non-spherical, it means the long axis length.

In the present specification, "D50" refers to a particle diameter corresponding to a volume of 50% with respect to a cumulative particle distribution ordered from smallest size to largest size. Unless otherwise defined herein, and the distribution is accumulated in the order of the smallest particle size to the largest particle size. In the curve, when the total number of particles is 100%, it means the value of the particle diameter corresponding to 50% from the smallest particle.

The average particle diameter (D50) may be measured by a method well known to those skilled in the art, for example, may be measured by a particle size analyzer (HORIBA, LA-950 laser particle size analyzer, a laser diffraction particle diameter distribution meter, scanning electron microscope (SEM), or a transmission electron microscope (TEM). As another method, it is measured using a measuring device using a dynamic light-scattering method, data analysis is performed, the number of particles is counted for each particle size range, and the average particle diameter is calculated therefrom. (D50) value can be easily obtained.

For example, the average particle diameter may be measured utilizing a particle size distribution (PSD) meter and/or through scanning electron microscopy (SEM). The long-axis length may be measured through SEM.

Hereinafter, a method of preparing a nickel-based composite positive electrode active material according to an embodiment will be described.

First, a lithium precursor and a metal hydroxide precursor of a nickel-based composite positive electrode active material are mixed, and the mixture is subjected to a primary heat treatment. A first nickel-based active material may be obtained through the primary heat treatment. The first nickel-based active material is a compound represented by Formula 3, and this compound may include an overlithiated oxide (OLO) phase. The OLO phase may be represented by the same Formula as $Li_2MnO_3$.

$$\text{Formula 3} \qquad Li_a(Ni_{1-x-y-z}Co_xMn_yM'_z)O_{2+\alpha 2}$$

In Formula 3, M' is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$1.05 \leq a \leq 1.3$, $0 < x < 1$, $0 \leq y < 1$, $0 \leq z < 1$, $0.3 \leq (1-x-y-z) < 1$, and $0 \leq \alpha 2 \leq 0.3$ are satisfied.

In Formula 3, the sum of the mole fractions of Ni, Co, Mn and M' is 1.

In the compound of Formula 3, the amount of nickel may be, for example, about 30 mol% to about 85 mol%, for example, about 30 mol% to about 80 mol% based on 100 mol% of the total amount of Ni, Co, Mn and M'.

The compound of Formula 3 may be, for example, $Li_{1.1}Ni_{0.6}Co_{0.2}Mn_{0.2}O_{2+\alpha}(0 \leq \alpha \leq 0.3)$, $Li_{1.1}Ni_{0.5}Co_{0.2}Mn_{0.3}O_{2+\alpha}(0 \leq \alpha \leq 0.3)$, $Li_{1.1}Ni_{1/3}Co_{1/3}Mn_{1/3}O_{2+\alpha}(0 \leq \alpha \leq 0.3)$, $Li_{1.1}$ $Ni_{0.8}Co_{0.1}Mn_{0.1}O_{2+\alpha}(0 \leq \alpha \leq 0.3)$, $Li_{1.2}Ni_{0.6}Co_{0.2}Mn_{0.2}O_{2+\alpha}(0 \leq \alpha \leq 0.3)$, $Li_{1.2}Ni_{0.5}Co_{0.2}Mn_{0.3}O_{2+\alpha}(0 \leq \alpha \leq 0.3)$, $Li_{1.2}Ni_{1/3}Co_{1/3}Mn_{1/3}O_{2+\alpha}(0 \leq \alpha \leq 0.3)$, $Li_{1.2}Ni_{0.8}Co_{0.1}Mn_{0.1}O_{2+\alpha}(0 \leq a \leq 0.3)$, etc. The compound of Formula 3 may be, for example, $Li_{1.1}Ni_{0.6}Co_{0.2}Mn_{0.2}O_{2.1}$, $Li_{1.1}Ni_{0.5}Co_{0.2}Mn_{0.3}O_{2.1}$, $Li_{1.1}Ni_{1/3}Co_{1/3}Mn_{1/3}O_{2.1}$, $Li_{1.1}Ni_{0.8}Co_{0.1}Mn_{0.1}O_{2.1}$, $Li_{1.2}Ni_{0.2}Co_{0.2}Mn_{0.2}O_{2.2}$, $Li_{1.2}Ni_{0.5}Co_{0.2}Mn_{0.3}O_{2.2}$, $Li_{1.2}Ni_{1/3}Co_{1/3}Mn_{1/3}O_{2.2}$, $Li_{1.2}Ni_{0.8}Co_{0.1}Mn_{0.1}O_{2.2}$, etc.

The metal hydroxide may be a compound represented by Formula 2.

$$\text{Formula 2} \qquad (Ni_{1-x-y-z}Co_xMn_yM_z)(OH)_2$$

In Formula 2, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and $0 < x < 1$, $0 \leq y < 1$, $0 \leq z < 1$, and $0.3 \leq (1-x-y-z) < 1$ are satisfied.

In Formula 2, the sum of the mole fractions of Ni, Co, Mn and M is 1.

For example, in Formula 2, $0 < x \leq 0.3$, $0 \leq y \leq 0.5$, $0 \leq z \leq 0.05$, and $0.5 \leq (1-x-y-z) \leq 0.95$ may be satisfied.

The amount of nickel in the metal hydroxide of Formula 2 may be about 30 mol% to about 85 mol%, for example, about 30 mol% to about 80 mol%, based on 100 mol% of the total amount of Ni, Co, Mn and M.

The metal hydroxide of Formula 2 may be, for example, $Ni_{0.6}Co_{0.2}Mn_{0.2}(OH)_2$, $Ni_{0.5}Co_{0.2}Mn_{0.3}(OH)_2$, $Ni_{1/3}Co_{1/3}Mn_{1/3}OH_2$, $Nio_{08}Co_{0.1}Mn_{0.1}OH)_2$, etc.

As a lithium precursor, for example, lithium hydroxide, lithium fluoride, lithium carbonate, $Li_2COOH$, or a mixture thereof may be utilized. In some embodiments, the amount of the lithium precursor is controlled such that a molar ratio (Li/Me) of lithium of the lithium precursor to metals other than Li (Me)(e.g., total metals other than lithium) of the nickel-based composite positive electrode active material precursor is greater than 1.0, for example about 1.05 to about 1.3, for example, about 1.1 to about 1.2. The transition metal of the metal hydroxide refers to a combined metal of Ni, Co, Mn, and M in Formula 2. The amount of the lithium precursor and the metal hydroxide is stoichiometrically adjusted to prepare the nickel-based active material of Formula 3.

The mixing may be dry mixing, and may be performed utilizing a blender, etc.

The primary heat treatment may be performed in an oxidizing gas atmosphere. The oxidizing gas atmosphere uses an oxidizing gas or air, and for example, the oxidizing gas may be composed of about 40 volume% to about 100 volume% of oxygen and about 0 volume% to about 60 volume% of an inert gas.

The primary heat treatment may be performed in a temperature range below the densification temperature as the reaction between the lithium precursor and the metal hydroxide takes place. In this case, "densification temperature" refers to a temperature at which crystallization is sufficiently achieved to allow the active material to realize charging capacity. The primary heat treatment may be performed at about 800 °C to about 950 °C, or at about 850 °C to about 950 °C.

The time for the primary heat treatment varies according to the low temperature heat treatment temperature, but for example, the primary heat treatment is performed for about 3 hours to about 10 hours.

The first nickel-based active material obtained through the primary heat treatment process has a layered crystal structure. An OLO phase is formed in an area partially rich in lithium in the layered crystal structure. A lithium carbonate layer may be formed on the surface of the first nickel-based active material, and as excess lithium enters the place of a transition metal layer, cation mixing may increase and the oxidation number of nickel may increase. The OLO phase may have excellent capacity properties, but has a high activation potential and a large amount of residual lithium, causing a great deal of surface side reactions; however through the process described below, the OLO phase may become a spinel phase having a lower oxidation number of nickel and excellent rate properties compared to the OLO phase, and the residual lithium may be removed through reaction with a second nickel-based active material having a molar ratio (Li/Me) of lithium metal (Li) to metals other than Li (Me)) of less than 1 and/or with a compound containing at least one selected from titanium, zirconium, magnesium, barium, boron, and aluminium.

Subsequently, a second nickel-based active material having a Li/Me ratio of less than 1 is added and mixed to/with the first nickel-based active material having excess lithium, and then the mixture is subjected to secondary heat treatment.

As the second nickel-based active material having a Li/Me ratio of less than 1, a compound represented by Formula 4 may be utilized:

**Formula 4**    $Li_a(Ni_{1-x-y-z}Co_xMn_yM''_z)O_{2\pm\alpha1}$

In Formula 4, M" is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$0.8 \leq a \leq 0.99$, $0 < x < 1$, $0 \leq y < 1$, $0 \leq z < 1$, $0.3 \leq (1-x-y-z) < 1$, and $0 \leq \alpha1 \leq 0.1$ are satisfied.

In Formula 4, the sum of the mole fractions of Ni, Co, Mn, and M" is 1.

For example, in Formula 4, a may be about 0.82 to about 0.98, about 0.85 to about 0.97, about 0.86 to about 0.96, or about 0.88 to about 0.95.

In the second nickel-based active material having a Li/Me ratio of less than 1, the molar ratio of Li/Me may be, for example, about 0.8 to about 0.99, for example, about 0.8 to about 0.9. The amount of nickel in Formula 4 may be about 30 mol% to about 80 mol%, based on 100 mol% of the total amount of Ni, Co, Mn and M".

The compound of Formula 4 may be, for example, $Li_{0.8}Ni_{0.6}Co_{0.2}Mn_{0.2}O_2$, $Li_{0.8}Ni_{0.5}Co_{0.2}Mn_{0.3}O_2$, $Li_{0.8}Ni_{1/3}Co_{1/3}Mn_{1/3}O_2$, $Li_{0.8}Ni_{0.8}Co_{0.1}Mn_{0.1}O_2$, $Li_{0.8}Ni_{0.85}Co_{0.1}Al_{0.05}O_2$, $Li_{0.9}Ni_{0.6}Co_{0.2}Mn_{0.2}O_2$, $Li_{0.9}Ni_{0.5}Co_{0.2}Mn_{0.3}O_2$, $Li_{0.9}Ni_{1/3}Co_{1/3}Mn_{1/3}O_2$, $Li_{0.9}Ni_{0.8}Co_{0.1}Mn_{0.1}O_2$, $Li_{0.9}Ni_{0.85}Co_{0.1}Al_{0.05}O_2$, etc.

According to a method of preparing a nickel-based composite positive electrode active material according to an embodiment, a first nickel-based active material having excess lithium is utilized as a starting material, and accordingly, a positive electrode active material having a maximum or high capacity may be obtained. In some embodiments, cation mixing caused when utilizing the first nickel-based active material having excess lithium may be removed through the reaction with the second nickel-based active material having a Li/Me ratio of less than 1, and a spinel phase obtained through the process may lower the resistance of a composite positive electrode active material.

As described above, when the second nickel-based active material having a Li/TM ratio of less than 1 is added, a lithium carbonate layer present on the surface of the first nickel-based active material (e.g., with a OLO phase) having excess lithium acts as a lithium precursor to react with the second nickel-based active material having a Li/TM ratio of less than 1, thereby removing the lithium carbonate layer from the first nickel-based active material having excess lithium. Lithium of the OLO phase may be utilized to be converted into the spinel phase, and in the process, the oxidation number of nickel may be restored to the normal range. As a result, a nickel-based composite positive electrode active material having a structure in which the spinel phase is present together between a layered phase may be formed. As such, when the second nickel-based active material having a Li/Me ratio of less than 1 is utilized, residual lithium of the first nickel-based active material having excess lithium may be removed.

The amount of the second nickel-based active material having a Li/Me ratio of less than 1 may be about 10 parts by weight to about 90 parts by weight, about 20 parts by weight to about 80 parts by weight, about 30 parts by weight to about 70 parts by weight, or about 40 parts by weight to about 60 parts by weight, with respect to 100 parts by weight of the first nickel-based active material having excess lithium. When the amount of the second nickel-based active material having a Li/Me ratio of less than 1 is within the above range, a nickel-based composite positive electrode active material having improved ionic conductivity and capacity properties may be obtained.

In the nickel-based composite positive electrode active material according to an embodiment, the spinel phase may be present between the layered phase to form a bridge zone connecting the layered phase. The formation of the bridge zone with the spinel shape may be found (analyzed) utilizing transmission electron microscopy (TEM).

The temperature of the secondary heat treatment may be controlled to be lower than the temperature of the primary heat treatment, and the secondary heat treatment may be performed, for example, at about 750 °C to about 900 °C, about 800 °C to about 900 °C or about 800 °C to about 850 °C. When the secondary heat treatment is performed at a higher temperature than the primary heat treatment, capacity properties may deteriorate due to over-calcination of the composite positive electrode active material. The time for the secondary heat treatment varies according to the temperature of the secondary heat treatment, but for example, the secondary heat treatment may be performed for about 3 hours to about 10 hours.

The first nickel-based active material having excess lithium and the second nickel-based active material having a Li/Me ratio of less than 1 may have the same or similar average particle diameters. For example, the average particle diameter may be about 2 $\mu$m to about 18 $\mu$m, about 3 $\mu$m to about 15 $\mu$m, or for example about 5 $\mu$m to about 12 $\mu$m.

In the high-temperature heat treatment process, a compound containing at least one selected from titanium, zirconium, magnesium, barium, boron, and aluminium may be further added.

The compound containing at least one selected from titanium, zirconium, magnesium, barium, boron, and aluminium may be, for example, titanium oxide, zirconium oxide, magnesium oxide, barium carbonate, boric acid, aluminium oxide, etc.

The amount of the compound containing at least one selected from titanium, zirconium, magnesium, barium, boron, and aluminium may be about 0.0001 parts by weight to about 10 parts by weight, about 0.0001 parts by weight to about 1 part by weight, or for example about 0.0005 parts by weight to about 0.01 parts by weight, with respect to 100 parts by weight of a nickel-based active material. In 100 parts by weight of the nickel-based active material, the nickel-based active material may refer to the first nickel-based active material.

The presence and distribution of one or more oxides selected from titanium, zirconium, magnesium, barium, boron, and aluminium may be found through electron probe micro-analysis (EPMA).

Using a method of preparing a nickel-based composite positive electrode active material according to an embodiment, a nickel-based composite positive electrode active material for a lithium secondary battery having improved charging/discharging efficiency, lifespan, and high capacity may be obtained.

The nickel-based composite positive electrode active material for a lithium secondary battery according to an embodiment may have a residual lithium amount of less than 0.3% by weight and a cation mixing degree of less than 5%. Cation mixing may be evaluated according to X-ray diffraction analysis as described in Evaluation Example 3. For example, cation mixing may be evaluated by utilizing the intensity ratio of the peak corresponding to a (003) plane (peak at 2θ of about 18° to about 19°) and the peak corresponding to a (104) plane (peak at 2θ of about 44.5°).

Hereinafter, a method of preparing a lithium secondary battery including a positive electrode having a nickel-based composite positive electrode active material, a negative electrode, a non-aqueous electrolyte containing a lithium salt, and a separator according to an embodiment will be described.

A composition for forming a positive electrode active material layer and a composition for forming a negative electrode active material layer may each be applied and dried on an electrode collector to form a positive electrode active material layer and a negative electrode material layer so as to prepare the positive electrode and the negative electrode, respectively.

The composition for forming a positive electrode active material may be prepared by mixing a positive electrode active material, a conductive agent, a binder, and a solvent, and as the positive electrode active material, the positive electrode active material according to an embodiment may be utilized.

The positive electrode binder serves to improve adhesion between positive electrode active material particles and/or adhesion between the positive electrode active material and the positive electrode collector. Non-limiting examples include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, recycled cellulose, polyvinylpyrrolidone, tetrafluoroethylene, polyethylene, polypropylene, ethylene-propylene-diene monomer(EPDM) rubber, sulfonated-EPDM, styrene butadiene rubber (SBR), fluorine rubber, suitable copolymers thereof, etc., and one alone or a mixture of two or more may be utilized.

The conductive agent may be utilized without particular limitation as long as it has conductivity without causing unwanted chemical changes in a battery, and for example, graphite (such as natural graphite and/or artificial graphite); carbon-based materials (such as carbon black, acetylene black, ketjen black, channel black, furnace black, lamp black, and/or thermal black); conductive fibers (such as carbon nanotubes, carbon fibers, and metal fibers); carbon fluoride; metal powder (such as aluminium and/or nickel powder); conductive whiskers (such as zinc oxide and/or potassium titanate); conductive metal oxides (such as titanium oxide); conductive materials (such as polyphenylene derivatives) may be utilized.

The amount of the conductive agent may be about 1 part by weight to about 10 parts by weight, or about 1 part by weight to about 5 parts by weight, with respect to 100 parts by weight of the positive electrode active material. When the amount of the conductive agent is within the range, the finally obtained electrode has excellent conductivity properties.

As a non-limiting example of the solvent, N-methylpyrrolidone, etc. is utilized, and the amount of the solvent is about 20 parts by weight to about 200 parts by weight with respect to 100 parts by weight of the positive electrode active material. When the amount of the solvent is within the range, the operation for forming the positive electrode active material layer is easy.

The positive electrode collector may have a thickness of about 3 $\mu$m to about 500 $\mu$m, and is not particularly limited as long as it has high conductivity without causing unwanted chemical changes in a battery; and for example, stainless steel, aluminium, nickel, titanium, heat-treated carbon, or aluminium or stainless steel that is surface-treated with one of carbon, nickel, titanium, silver, etc. may be utilized. Fine irregularities may be formed on the surface of the collector to improve the adhesion of the positive electrode active material, and the collector may have various suitable forms (such as a film, a sheet, a foil, a net, a porous body, a foam body, and/or a non-woven fabric body).

Separately, a negative electrode active material, a binder, and a solvent may be mixed to prepare a composition for forming a negative electrode active material layer.

The negative electrode active material is a material capable of absorbing and desorbing lithium ions. As a non-limiting example of the negative electrode active material, a carbon-based material (such as graphite and/or carbon), lithium metal, an alloy thereof, a silicon oxide-based material, etc. may be utilized. According to an embodiment of the present disclosure, a silicon oxide is utilized.

Non-limiting examples of a negative electrode binder include polyvinylidene fluoride-hexafluoropropylene copolymer (PVDF-co-HFP), polyvinylidene fluoride, polyacrylonitrile, polymethyl methacrylate, polyvinyl alcohol, carboxymethylcellulose (CMC), starch, hydroxypropylcellulose, recycledcellulose, polyvinylpyrrolidone, tetrafluoroethylene, polyethylene, polypropylene, polyacrylic acid, ethylene-propylene-diene monomer (EPDM) rubber, sulfonated EPDM, styrene butadiene rubber (SBR), fluorine rubber, polyacrylic acid, one or more suitable kinds of binder polymers (such as polymers prepared by substituting hydrogen with Li, Na and/or Ca), and/or various suitable copolymers, etc.

The negative electrode active material layer may further include a conductive agent. The conductive agent may be utilized without particular limitation as long as it has conductivity without causing unwanted chemical changes in a battery, and for example, graphite (such as natural graphite and/or artificial graphite); carbon-based materials (such as carbon black, acetylene black, ketjen black, channel black, furnace black, lamp black, and/or thermal black); conductive fibers (such as carbon fibers and/or metal fibers); conductive tubes (such as carbon nanotubes); carbon fluoride; metal powder (such as aluminium, and/or nickel powder); conductive whiskers (such as zinc oxide and/or potassium titanate); conductive metal oxides (such as titanium oxide); conductive materials (such as polyphenylene derivatives), etc. may be utilized. The conductive agent may be carbon black, and for example, may be carbon black having an average particle diameter of several tens of nanometers.

The conductive agent may be about 0.01 parts by weight to about 10 parts by weight, about 0.01 parts by weight to about 5 parts by weight, or about 0.1 parts by weight to about 2 parts by weight, with respect to 100 parts by weight of the total weight of the negative electrode active material layer.

The composition for forming the negative electrode active material layer may further include a thickener. As the thickener, at least any one among carboxymethyl cellulose (CMC), carboxyethyl cellulose, starch, recycled cellulose, ethyl cellulose, hydroxymethyl cellulose, hydroxyethyl cellulose, hydroxypropyl cellulose, and polyvinyl alcohol may be utilized, and for example, CMC may be utilized.

The amount of the solvent may be about 100 parts by weight to 300 parts by weight with respect to 100 parts by weight of the total weight of the negative electrode active material. When the amount of the solvent is within the range, the operation for forming the negative electrode active material layer is easy.

The negative electrode collector may be generally formed to have a thickness of about 3 $\mu$m to about 500 $\mu$m. The negative electrode collector is not particularly limited as long as it has high conductivity without causing unwanted chemical changes in a battery, and for example, copper, stainless steel, aluminium, nickel, titanium, heat-treated carbon, or copper or stainless steel that is surface-treated with one of carbon, nickel, titanium, silver, etc. may be utilized. In some embodiments, as the negative electrode collector, fine irregularities may be formed on the surface thereof to improve the adhesion of the negative electrode active material, and the negative electrode collector may have various suitable forms (such as a film, a sheet, a foil, a net, a porous body, a foam body, and/or a non-woven fabric body).

A separator may be disposed between the positive electrode and the negative electrode prepared according to the process.

The separator may have a pore diameter of about 0.01 $\mu$m to about 10 $\mu$m and a thickness of generally about 5 $\mu$m to about 30 $\mu$m. For example, an olefin-based polymer (such as polypropylene and/or polyethylene); or a sheet or non-woven fabric formed of glass fibers is utilized. When a solid electrolyte such as a polymer is utilized as an electrolyte, the solid electrolyte may also serve as a separator.

A lithium salt-containing non-aqueous electrolyte is formed of a non-aqueous electrolyte and a lithium salt. As the non-aqueous electrolyte, a non-aqueous electrolyte solution, an organic solid electrolyte, an inorganic solid electrolyte, etc. are utilized.

As non-limiting examples of the non-aqueous electrolyte solution, aprotic organic solvents (such as N-methyl-2-pyrrolidinone, propylene carbonate, ethylene carbonate, butylene carbonate, dimethyl carbonate, diethyl carbonate, gamma-butyrolactone, 1,2-dimethoxy ethane, 2-methyl tetrahydrofuran, dimethyl sulfoxide, 1,3-dioxolane, N,N-formamide, N,N-dimethylformamide, dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, ethyl propionate, etc.) may be utilized.

As non-limiting examples of the organic solid electrolyte, polyethylene derivatives, polyethylene oxide derivatives, polypropylene oxide derivatives, phosphate ester polymers, polyester sulfide, polyvinyl alcohol, polyvinylidene fluoride, etc. may be utilized.

As non-limiting examples of the inorganic solid electrolyte, $Li_3N$, LiI, $Li_5NI_2$, $Li_3N$-LiI-LiOH, $LiSiO_4$, $Li_2SiS_3$, $Li_4SiO_4$, $Li_4SiO_4$-LiI-LiOH, and/or $Li_3PO_4$-$Li_2S$-$SiS_2$ may be utilized.

The lithium salt is a material that is readily soluble in the non-aqueous electrolyte, and as non-limiting examples, LiCl, LiBr, LiI, $LiClO_4$, $LiBF_4$, $UB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, $(FSO_2)_2NLi$, lithium chloroborate, lithium lower aliphatic carboxylate, lithium tetraphenylborate, etc. may be utilized.

FIG. 6 is a schematic cross-sectional view illustrating a typical structure of a lithium secondary battery according to an embodiment.

Referring to FIG. 6, a lithium secondary battery 21 includes a positive electrode 23, a negative electrode 22, and a separator 24. An electrode assembly in which the positive electrode 23, the negative electrode 22, and the separator 24 are wound or folded is accommodated in a battery case 25. According to the shape of a battery, the separator may be disposed between the positive electrode and the negative electrode to form an alternately stacked battery structure. Subsequently, an organic electrolyte is injected into the battery case 25 and sealed with a cap assembly 26 to prepare the lithium secondary battery 21. The battery case 25 may be a cylindrical, rectangular, or thin-film type or format, etc. For example, the lithium secondary battery 21 may be a large thin film type or format battery. The lithium secondary battery may be a lithium ion battery. The battery structure may be accommodated in a pouch, and then impregnated with the organic electrolyte and sealed to prepare a lithium ion polymer battery. In some embodiments, a plurality of the battery structures may be stacked to form a battery pack, and such a battery pack may be utilized in all devices requiring high capacity and high output. For example, the battery pack may be utilized for laptops, smartphones, electric vehicles, etc.

In some embodiments, the lithium secondary battery may have excellent storage stability at high temperatures, lifespan, and/or high rate properties to be utilized for an electric vehicle (EV). For example, the lithium secondary battery may be utilized in hybrid vehicles such as plug-in hybrid electric vehicles (PHEV).

Examples and Comparative Examples are described below in more detail. However, embodiments of the present disclosure are not limited thereto.

Preparation Example 1: Preparation of a composite metal hydroxide

A co-precipitation method was performed to obtain a composite metal hydroxide ($Ni_{0.5}Co_{0.2}Mn_{0.3}(OH)_2$).

Ammonia water was added to a reactor, a raw material of the composite metal hydroxide was added thereto while the amount of raw material of the composite metal hydroxide was stoichiometrically controlled to obtain a composition of a final product, and utilizing sodium hydroxide, the pH of the mixture in the reactor was adjusted. Next, the resultant was subjected to the reaction to have a desired or suitable size while being stirred, then the addition of the raw material solution was stopped to obtain a target product through a drying process. This preparation process is described in more detail as follows.

As a raw material of a nickel-based active material, nickel sulfate ($NiSO_4 \cdot 6H_2O$), cobalt sulfate ($CoSO_4 \cdot 7H_2O$),

and manganese sulfate ($MnSO_4 \cdot H_2O$) were dissolved in distilled water as a solvent so as to have a molar ratio of 5:2:3 to prepare a mixed solution. A dilute solution of aqueous ammonia ($NH_4OH$) and sodium hydroxide (NaOH) were prepared as a precipitant to form a complex compound. Thereafter, a mixed solution of metal raw materials, aqueous ammonia, and sodium hydroxide were added to the reactor. Sodium hydroxide was added to maintain the pH inside the reactor. Next, the resultant was subjected to reaction for about 20 hours while being stirred, and then the addition of the raw material solution was stopped.

The slurry solution in the reactor was filtered and washed with high-purity distilled water, and then dried in a hot air oven for 24 hours to obtain a composite metal hydroxide ($Ni_{0.5}Co_{0.2}Mn_{0.3}(OH)_2$) powder.

**Preparation of nickel-based composite positive electrode active materials**

**Example 1: Preparation of nickel-based composite positive electrode active material secondary particles**

The composite metal hydroxide ($Ni_{0.5}Co_{0.2}Mn_{0.3}(OH)_2$) obtained according to Preparation Example 1 and lithium carbonate ($Li_2CO_3$) were mixed at a 1:1.1 molar ratio in a dry system utilizing a Henschel mixer, and the mixture was subjected to primary heat treatment at about 900 °C for 10 hours in an air atmosphere to obtain a first nickel-based active material ($Li_{1.1}Ni_{0.5}Co_{0.2}Mn_{0.3}O_2$) (active material A).

Then, a second nickel-based active material ($Li_{0.95}Ni_{0.5}Co_{0.2}Mn_{0.3}O_2$) having a Li/Me molar ratio of about 0.95 was added and mixed with the first nickel-based active material ($Li_{1.1}Ni_{0.5}Co_{0.2}Mn_{0.3}O_2$), and the mixture was subjected to secondary heat treatment at about 850 °C to obtain a nickel-based composite positive electrode active material.

The amount of the second nickel-based active material ($Li_{0.95}Ni_{0.5}Co_{0.2}Mn_{0.3}O_2$) having a Li/Me molar ratio of about 0.95 is 40 parts by weight with respect to 100 parts by weight of the first nickel-based active material ($Li_{1.1}Ni_{0.5}Co_{0.2}Mn_{0.3}O_2$).

**Example 2**

A nickel-based composite positive electrode active material was obtained in substantially the same manner as in Example 1, except that aluminium oxide was added when the second nickel-based active material ($Li_{0.95}Ni_{0.5}Co_{0.2}Mn_{0.3}O_2$) having a Li/Me molar ratio of about 0.95 was added and mixed with the first nickel-based active material ($Li_{1.1}Ni_{0.5}Co_{0.2}Mn_{0.3}O_2$). The amount of aluminum oxide is 0.05 parts by weight with respect to 100 parts by weight of the nickel-based active material ($Li_{1.1}Ni_{0.5}Co_{0.2}Mn_{0.3}O_2$).

**Example 3**

A nickel-based composite positive electrode active material was obtained in substantially the same manner as in Example 1, except that primary heat treatment was performed at 950 °C.

**Comparative Example 1**

Comparative Example 1 is an example in which a nickel-based active material was prepared only through a single heat treatment.

The composite metal hydroxide ($Ni_{0.5}Co_{0.2}Mn_{0.3}(OH)_2$) obtained according to Preparation Example 1 and lithium carbonate ($Li_2CO_3$) were mixed at a molar ratio of 1:1.1 in a dry system, and the mixture was subjected to heat treatment at about 900 °C for 10 hours to obtain a nickel-based active material ($Li_{1.1}Ni_{0.5}Co_{0.2}Mn_{0.3}O_2$).

**Comparative Example 2**

Comparative Example 2 is a mixed positive electrode active material prepared by performing a single heat treatment to obtain a first nickel-based active material and simply mixing the first nickel-based active material with a second nickel-based active material having a Li/Me molar ratio of about 0.95.

The composite metal hydroxide ($Ni_{0.5}Co_{0.2}Mn_{0.3}(OH)_2$) obtained according to Preparation Example 1 and lithium carbonate ($Li_2CO_3$) were mixed at a molar ratio of 1:1.1 in a dry system, and the mixture was subjected to heat treatment at about 900 °C for 10 hours to obtain a first nickel-based active material ($Li_{1.1}Ni_{0.5}Co_{0.2}Mn_{0.3}O_2$).

Then, the second nickel-based active material ($Li_{0.95}Ni_{0.5}Co_{0.2}Mn_{0.3}O_2$) having a Li/Me molar ratio of about 0.95 was added and mixed with the first nickel-based active material ($Li_{1.1}Ni_{0.5}Co_{0.2}Mn_{0.3}O_2$) to obtain a mixed positive electrode active material. In this case, the amount of the second nickel-based active material ($Li_{0.95}Ni_{0.5}Co_{0.2}Mn_{0.3}O_2$) having a molar ratio of Li/Me of about 0.95 is 40 parts by weight with respect to 100 parts by weight of the first nickel-based active material ($Li_{1.1}Ni_{0.5}Co_{0.2}Mn_{0.3}O_2$).

**Comparative Example 3**

A composite positive electrode active material was obtained in substantially the same manner as in Example 1, except that primary heat treatment was performed at 800 °C and secondary heat treatment was performed at 900 °C.

According to Comparative Example 3, a composite positive electrode active material having severe aggregation between particles due to over-calcination was obtained.

**Preparation of lithium secondary batteries**

**Manufacture Example 1**

As a positive electrode active material, secondary particles of the nickel-based composite positive electrode active material ($LiNi_{0.5}Co_{0.2}Mn_{0.2}O_2$) obtained according to Example 1 were utilized to prepare a lithium secondary battery as follows.

Air bubbles were removed from a mixture of 96 g of nickel-based composite positive electrode active material ($LiNi_{0.5}Co_{0.2}Mn_{0.3}O_2$) secondary particles obtained according to Example 1, 2 g of polyvinylidene fluoride, 47 g of N-methylpyrrolidone as a solvent, and 2 g of carbon black as a conductive agent, utilizing a blender to prepare a uniformly dispersed slurry for forming a positive electrode active material layer.

The slurry prepared according to the above process was coated on an aluminium foil, utilizing a doctor blade to form a thin electrode plate, and then the resultant was dried at 135 °C for more than 3 hours to prepare a positive electrode through rolling and vacuum drying processes.

A 2032 type or format coin cell was prepared utilizing the positive electrode and a lithium metal counter electrode as a counter electrode. A separator formed of a porous polyethylene (PE) film (thickness: about 16 $\mu$m) was disposed between the positive electrode and the lithium metal counter electrode, and an electrolyte solution was injected to prepare a 2032 type or format coin cell. In this case, the electrolyte solution was a solution containing 1.1 M $LiPF_6$ dissolved in a solvent in which ethylene carbonate (EC) and ethyl methyl carbonate (EMC) were mixed in a volume ratio of 3:5.

**Manufacture Examples 2 and 3**

A lithium secondary battery was prepared in substantially the same manner as in Manufacture Example 1, except that the nickel-based active materials prepared according to Examples 2 and 3 were utilized instead of the nickel-based composite positive electrode active material prepared according to Example 1.

**Comparative Manufacture Examples 1 to 3**

A lithium secondary battery was prepared in substantially the same manner as in Manufacture Example 1, except that the nickel-based active materials prepared according to Comparative Examples 1 to 3 were utilized instead of the nickel-based composite positive electrode active material prepared according to Example 1.

**Evaluation Example 1: Transmission electron microscope**

Transmission electron microscope (TEM) analysis was performed on the nickel-based composite positive electrode active material obtained according to Example 1. Transmission scanning microscope (TECNAI F30, Thermo Fisher) was utilized. Sample cross sections were pretreated at 30 kV utilizing Helios G4 HX and Thermo Fisher. In some embodiments, transmission electron microscope analysis was performed at 300 keV.

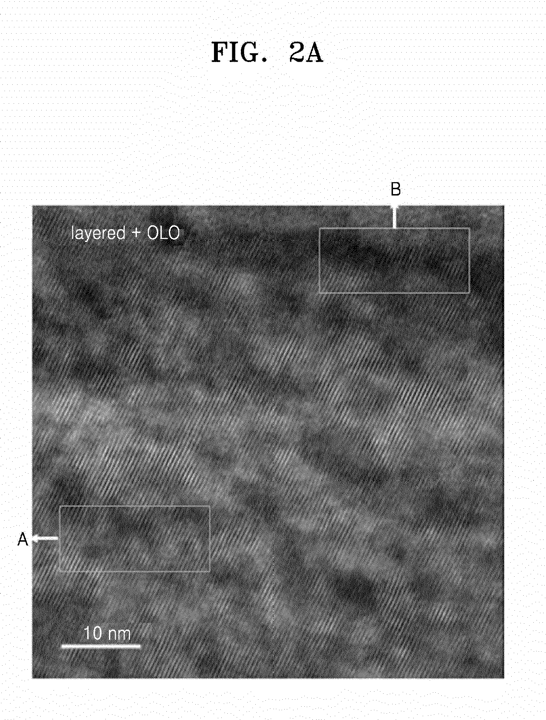

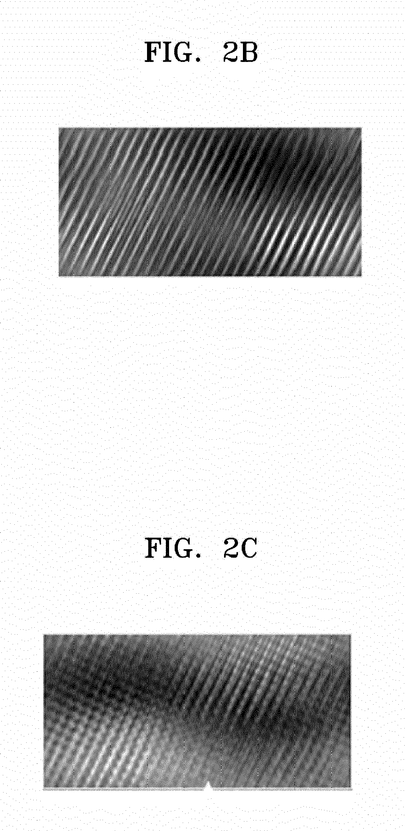

After performing primary heat treatment when preparing the nickel-based composite positive electrode active material according to Example 1, transmission electron microscope analysis results of a surface portion of the first nickel-based active material obtained through the primary heat treatment are shown in FIGS. 2A to 2C. FIG. 2B is an enlarged view of A in FIG. 2A, and FIG. 2C is an enlarged view of B in FIG. 2A.

Referring to these, it was found that in the first nickel-based active material obtained after performing the primary heat treatment in Example 1, area A has a layered crystal structure (see FIG. 2B) and area B has an OLO phase (see FIG. 2C).

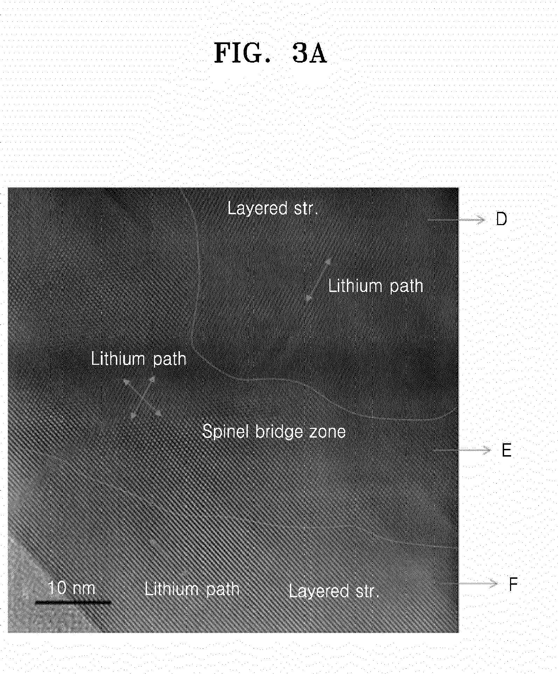

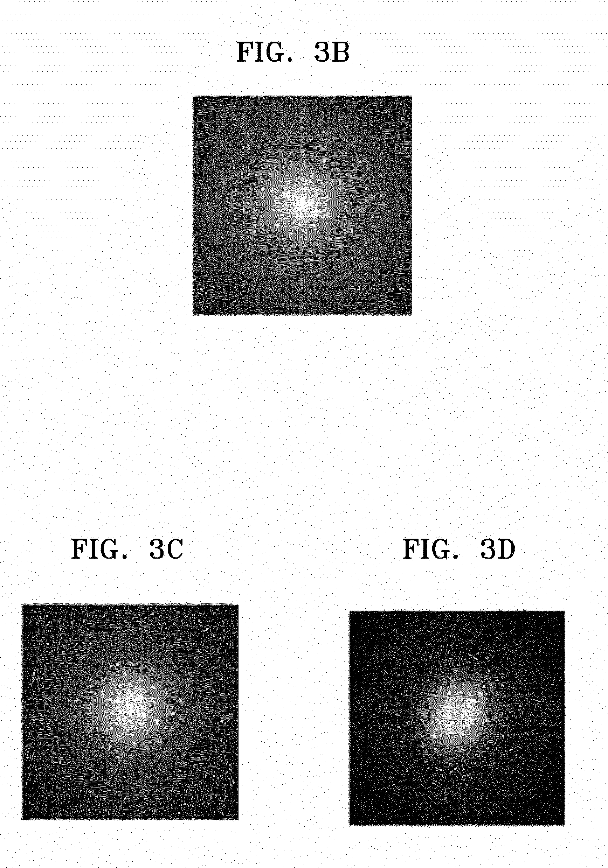

Transmission electron microscope analysis was performed on the nickel-based composite positive electrode active material obtained according to Example 1. The analysis results are as shown in FIGS. 3A to 3D.

As shown in FIG. 3A, it is seen that the nickel-based composite positive electrode active material of Example 1 has a structure in which a spinel bridge zone (area E) is formed between the layered crystal structures (areas D (layered phase (Layered str.) and F (Layered phase (Layered str.)). That is, the spinel bridge zone (area E) is a zone in which the layered phase and the spinel phase are randomly formed. FIGS. 3B to 3D are analysis of diffraction patterns through fast Fourier transform (FFT) conversion for regions D, E and F of FIG. 3A, respectively. Each crystal structure and crystal orientation are found from FIGS. 3B to 3D.

**Evaluation Example 2: Transmission electron microscope analysis**

Transmission electron microscope analysis was performed on the nickel-based composite positive electrode active material obtained according to Example 1. Transmission scanning microscope (TECNAI F30, Thermo Fisher) was utilized. Sample cross sections were pretreated at 30 kV utilizing Helios G4 HX and Thermo Fisher. In some embodiments, transmission electron microscope analysis was performed at 300 keV.

Transmission electron microscope analysis results are shown in FIGS. 4A to 4D. FIG. 4B shows an enlarged view and a phase map of region G of FIG. 4A. FIGS. 4C and 4D show the crystal structures (i.e., layered phase (layered str.) and spinel phase (spinel str.)) at points H and I of FIG. 4B, respectively. FIGS. 5A to 5C show the distribution of the layered phase and the spinel phase for the primary particles of the two composite positive electrode active materials.

Referring to these, it is seen that the surface portion of the nickel-based composite positive electrode active material has a structure in which a layered phase and a spinel phase are mixed together, and the spinel phase is dispersed and arranged in a layered matrix. The thickness of the surface portion was found to be less than about 10 nm. In addition, it was found that the spinel phase was randomly present and arranged as an island shape in an inner area within 100 nm from the surface of the composite positive electrode active material.

In the nickel-based composite positive electrode active material of Example 1 of FIG. 5A, the mixing ratio of the spinel phase and the layer phase in grain A and grain B areas was investigated. The mixing ratio of the spinel phase and the layered phase was calculated utilizing the respective areas of the spinel phase and the layered phase through a transmission electron microscope.

FIG. 5B shows the distribution of a layered phase and a spinel phase for grain A of primary particles of a first nickel-based composite positive electrode active material, and FIG. 5C shows the distribution of a layered phase and a spinel phase for grain B of primary particles of a second nickel-based composite positive electrode active material.

Referring to these, the amount of the layered phase and the spinel phase of respective primary particles was found. The primary particles of the first nickel-based composite positive electrode active material have a spinel phase amount of 7.3% as shown in FIG. 5B, and the primary particles of the second nickel-based composite positive electrode active material have a spinel phase amount of 20.1% as shown in FIG. 5C.

**Evaluation Example 3: X-ray diffraction analysis**

X-ray diffraction analysis was performed through X'pert pro (PANalytical) utilizing Cu K$\alpha$ radiation (1.54056Å) for the nickel-based composite positive electrode active materials of Examples 1 and 2, the positive electrode active material of Comparative Example 1, and the composite positive electrode active materials prepared according to Comparative Examples 2 and 3.

The following properties were investigated utilizing the results of the X-ray diffraction analysis and are shown in Table 1.

**(1) cation mixing**

Cation mixing may be calculated utilizing the intensity ratio of the peak corresponding to a (003) plane (peak at 2$\theta$ of about 18° to about 19°) and the peak corresponding to a (104) plane (peak at 2$\theta$ of about 44.5°) according to Equation 1:

## Equation 1

$$\text{Cation mixing}(\%) = \{I_{(003)}/I_{(104)}\} \times 100$$

In Equation 1, $I_{(003)}$ refers to the intensity of the peak corresponding to the (003) plane (the peak at 2$\theta$ of about 18.6°), and $I_{(104)}$ refers to the peak corresponding to the (104) plane (peak at 2$\theta$ of about 44.5°).

The peak corresponding to the (003) plane provides information on the layered phase of the positive electrode active material, and the peak corresponding to the (104) plane provides information on the layered and cubic rock-salt structure. As shown in Equation 1, the greater the $I_{(003)}/I_{(104)}$, the smaller the cation mixing ratio.

**(2) Residual lithium**

An acid-base titration method is utilized for evaluation.

**[Table 1]**

| Type | Cation mixing ratio (%) | Residual lithium (%) |
|---|---|---|
| Example 1 | 3.8 | 0.3 |
| Example 2 | 4.0 | 0.42 |
| Comparative Example 1 | 7.7 | 1.2 |
| Comparative Example 2 | 7.5 | 0.87 |

As shown in Table 1, the nickel-based composite positive electrode active materials prepared according to Examples 1 and 2 each have a decreased cation mixing ratio, compared to the positive electrode active material of Comparative Example 1 and the composite positive electrode active material prepared according to Comparative Example 2 to increase the capacity of a lithium secondary battery utilizing the composite positive electrode active material. In some embodiments, as shown in Table 1, the nickel-based composite positive electrode active material prepared according to Example 1 has a lower amount of residual lithium compared to the composite positive electrode active materials obtained according to Comparative Examples 1 and 2, and thus has no gas generation to have better safety.

**Evaluation Example 4: Efficiency and lifespan characteristics**

In the coin cells prepared according to Manufacture Examples 1 and 2 and Comparative Manufacture Examples 1 to 3, charge/discharge properties, etc. were evaluated utilizing a charge/discharge regulator (manufacturer: TOYO, model: TOYO-3100).
In first charging and discharging, the coin cells were constant-current charged up to 4.3 V with a current of 0.1 C, and then constant-voltage charged up to a current of 0.05 C. The cells in which the charging was completed were subjected to a pause (rest) period of about 10 minutes, and then constant-current discharged up to 3 V with a current of 0.1 C. In a second charge/discharge cycle, the coin cells were constant-current charged up to 4.3 V with a current of 0.2 C, and then constant-voltage charged up to a current of 0.05 C. The cells in which the charging was completed were subjected to a pause period of about 10 minutes, and then constant-current discharged up to 3 V with a current of 0.2 C.
In lifespan evaluation, the coin cells were constant-current charged up to 4.3 V with a current of 1 C, and then constant-voltage charged up to a current of 0.05 C. The cells in which the charging was completed were subjected to a pause period of about 10 minutes, and then a cycle of performing constant-current discharging was repeated 50 times on the cells until a voltage reaches 3 V with a current of 1 C.
Capacity retention ratio (CRR) was calculated utilizing Equation 2, charging/discharging efficiency was calculated utilizing Equation 3, and the capacity retention ratio and charging/discharging efficiency properties were investigated and shown in Table 2:

## Equation 2

$$\text{Capacity retention ratio [\%]} = [\text{Discharge capacity at 50th cycle / Discharge capacity at 1st cycle}] \times 100$$

## Equation 3

$$\text{Charging/discharging efficiency} = [\text{Average discharge voltage of the first cycle/ average charge voltage of the first cycle}] \times 100$$

[Table 2]

| Type | Charging/discharging efficiency (%) | Capacity retention ratio (@50 times) (%) |
|---|---|---|
| Preparation Example 1 | 91 | 98.1 |
| Preparation Example 2 | 92 | 94.3 |
| Comparative Manufacture Example 1 | 80 | 72.0 |
| Comparative Manufacture Example 2 | 84 | 74.7 |
| Comparative Manufacture Example 3 | 85 | 94.5 |

Referring to Table 2, it was found that the charging/discharging efficiency and lifespan properties of the coin cells prepared according to Manufacture Examples 1 and 2 were improved compared to those of Comparative Manufacture Examples 1 to 3.

In Comparative Manufacture Example 2, the mixed positive electrode active material obtained according to Comparative Example 2 was utilized as a positive electrode active material, and the mixed positive electrode active material had a high amount of residual lithium and a great deal of surface side reactions, causing poor lifespan for the lithium secondary battery utilizing the mixed positive electrode active material.

The composite positive electrode active material obtained according to Comparative Manufacture Example 3 was over-calcined, resulting in severe aggregation between particles. When a positive electrode containing such a composite positive electrode active material is utilized, the capacity retention ratio of the lithium secondary battery is excellent, but the charging/discharging efficiency deteriorates.

**Evaluation Example 5: Transmission electron microscope analysis**

Transmission electron microscope analysis was performed on the nickel-based composite positive electrode active material obtained according to Example 1.

Transmission scanning microscope (TECNAI F30, Thermo Fisher) was utilized. Sample cross sections were pretreated at 30 kV utilizing a Helios G4 HX and Thermo Fisher.

Transmission electron microscope analysis was performed at 300 keV.

FIG. 7A shows the results of transmission electron microscope analysis of a surface portion of a nickel-based composite positive electrode active material obtained according to Example 1.

FIGS. 7B to 7D show the results of analyzing regions B1, B2, and B3 of FIG. 7A, respectively, utilizing fast Fourier transform (FFT)-TEM.

FIG. 8A shows the results of transmission electron microscope analysis of one area of a core portion of a nickel-based composite positive electrode active material obtained according to Example 1.

FIGS. 8B to 8D show the results of analyzing regions A1, A2, and A3 of FIG. 8A, respectively, utilizing fast Fourier transform (FFT)-TEM.

FIG. 9A shows the results of transmission electron microscope analysis of other areas of a core portion of a nickel-based composite positive electrode active material obtained according to Example 1.

FIGS. 9B to 9D show the results of analyzing regions A4, A5, and A6 of FIG. 9A, respectively, utilizing fast Fourier transform (FFT)-TEM.

Referring to this, it was confirmed that a spinel phase exists between the layered phases in the surface portion and core portion of the nickel-based composite cathode active material obtained according to Example 1.

When utilizing the nickel-based composite positive electrode active material for a lithium secondary battery according to an embodiment, a lithium secondary battery having improved charging/discharging efficiency and/or ion conductivity, and having improved efficiency by increasing output may be prepared, despite the addition of excess lithium, by controlling changes in a surface structure (cation mixing) of a positive electrode active material compared to an existing dry coating method, and having reduced cation mixing by forming domains present as a composite phase including a spinel phase and a layered phase.

As used herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the disclosure as defined by claims and equivalents thereof.

**Claims**

1. A nickel-based composite positive electrode active material for a lithium secondary battery, the nickel-based composite positive electrode active material being in the form of secondary particles each comprised of a plurality of primary particles,
   wherein each of the plurality of primary particles comprises:

   a core portion formed of a nickel-based lithium metal oxide having a layered phase, and
   a surface portion positioned on the core portion, the surface portion comprising a composite structure including a spinel phase and the layered phase.

2. The nickel-based composite positive electrode active material of claim 1, wherein in the surface portion, an amount of the spinel phase contained in each of the primary particles has a concentration gradient in which the amount thereof increases in a direction towards the surface portion from the core portion.

3. The nickel-based composite positive electrode active material of claim 2, wherein the core portion further comprises the spinel phase.

4. The nickel-based composite positive electrode active material of any one of claims 1 to 3, wherein at least one of the spinel phase or the layered phase comprises structures having different orientations.

5. The nickel-based composite positive electrode active material of any one of claims 1 to 4, wherein the spinel phase is contained in an area within 100 nm from the surface of the nickel-based composite positive electrode active material.

6. The nickel-based composite positive electrode active material of claim 5, wherein the spinel phase is present in the form of a plurality of islands.

7. The nickel-based composite positive electrode active material of claim 1,
   wherein the core portion further comprises the spinel phase, and
   an amount of the spinel phase contained in the primary particles has a concentration gradient in which the amount thereof increases in a direction towards a surface from the center of the secondary particles of the nickel-based composite positive electrode active material, optionally wherein the amount of the spinel phase in an area within 100 nm from a surface of the nickel-based composite positive electrode active material is 70 parts by weight or less with respect to 100 parts by weight of the total weight of the layered phase and the spinel phase.

8. The nickel-based composite positive electrode active material of any one of claims 1 to 7, wherein:

   (i) a grain boundary area of the nickel-based lithium metal oxide comprises the spinel phase in the form of a plurality of islands; and/or
   (ii) the core portion further comprises the spinel phase in the form of a plurality of islands.

9. The nickel-based composite positive electrode active material of any one of claims 1 to 8, wherein the surface portion further comprises a compound containing at least one selected from titanium, zirconium, magnesium, barium, boron, and aluminium, optionally wherein the compound is titanium oxide, zirconium oxide, magnesium oxide, barium carbonate, boric acid, aluminium oxide, or a combination thereof.

**10.** The nickel-based composite positive electrode active material of any one of claims 1 to 9, wherein:

(i) the nickel-based composite positive electrode active material is a nickel-based composite positive electrode active material represented by Formula 1:

Formula 1 $\quad\quad Li_a(Ni_{1-x-y-z}Co_xMn_yM_z)O_{2\pm\alpha1}$

wherein, in Formula 1, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and
$0.95 \leq a \leq 1.3$, $0.3 \leq (1-x-y-z) < 1$, $0 < x < 1$, $0 \leq y < 1$, $0 \leq z < 1$, and $0 \leq \alpha1 \leq 0.1$ are satisfied; and/or

(ii) the amount of the spinel phase is about 0.1 parts by weight to about 30 parts by weight with respect to 100 parts by weight of the total weight of the layered phase and the spinel phase.

**11.** A method of preparing a nickel-based composite positive electrode active material for a lithium secondary battery, the method comprising:

mixing a nickel-based composite positive electrode active material precursor with a lithium precursor, and performing a primary heat treatment to obtain a first nickel-based active material; and
mixing a second nickel-based active material having a molar ratio (Li/(Me) of lithium metal (Li) to metals other than Li (Me) of less than 1 with the first nickel-based active material, and performing a secondary heat treatment to obtain the nickel-based composite positive electrode active material,
wherein a molar ratio (Li/Me) of lithium in the lithium precursor to metals other than Li (Me) of the nickel-based composite positive electrode active material precursor is greater than 1.0, and
the primary heat treatment is performed at a higher temperature than the secondary heat treatment.

**12.** The method of claim 11, wherein the primary heat treatment is performed at about 800 °C to about 950 °C, and the secondary heat treatment is performed at about 750 °C to about 900 °C.

**13.** The method of claim 11 or claim 12, wherein:

(i) in the mixing of the second nickel-based active material having a Li/Me ratio of less than 1 with the first nickel-based active material, at least one element selected from titanium, zirconium, magnesium, barium, boron, and aluminum is further added; and/or
(ii) the lithium precursor is lithium hydroxide, lithium fluoride, lithium carbonate, $Li_2COOH$, or a mixture thereof.

**14.** The method of any one of claims 11 to 13, wherein:

(i) the first nickel-based active material is a compound represented by Formula 3:

Formula 3 $\quad\quad Li_a(Ni_{1-x-y-z}Co_xMn_yM'_z)O_{2+\alpha2}$

wherein, in Formula 3, M' is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and
$1.05 \leq a \leq 1.3$, $0 < x < 1$, $0 \leq y < 1$, $0 \leq z < 1$, $0.3 \leq (1-x-y-z) < 1$, and $0 \leq \alpha2 \leq 0.3$ are satisfied; and/or

(ii) the second nickel-based active material having a Li/Me ratio of less than 1 is a compound represented by Formula 4:

Formula 4 $\quad\quad Lia(Ni_{1-x-y-z}Co_xMn_yM''_z)O_{2\pm\alpha1}$

wherein, in Formula 4, M" is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al), and

$0.8 \leq a \leq 0.99$, $0 < x < 1$, $0 \leq y < 1$, $0 \leq z < 1$, $0.3 \leq (1-x-y-z) < 1$, and $0 \leq \alpha 1 \leq 0.1$ are satisfied.

**15.** A lithium secondary battery comprising:

a positive electrode comprising the nickel-based composite positive electrode active material of any one of claims 1 to 14;

a negative electrode; and

an electrolyte between the positive electrode and the negative electrode.

# FIG. 1A

# FIG. 1B

# FIG. 1C

# FIG. 2A

FIG. 2B

FIG. 2C

# FIG. 3A

FIG. 3B

FIG. 3C

FIG. 3D

# FIG. 4A

# FIG. 4B

FIG. 4C

FIG. 4D

# FIG. 5A

## FIG. 5B

Grain A

G(%)=7.3%

Layered
:45.54%

Spinel
:3.6%

## FIG. 5C

Grain B

Layered
:25.96%

G(%)=20.1%

Spinel
:6.53%

# FIG. 6

# FIG. 7A

# FIG. 7B

## FIG. 7C

## FIG. 7D

# FIG. 8A

# FIG. 8B

FIG. 8C

FIG. 8D

## FIG. 9A

## FIG. 9B

FIG. 9C

FIG. 9D

Europäisches
Patentamt

European
Patent Office

Office européen
des brevets

# EUROPEAN SEARCH REPORT

Application Number

EP 21 17 9467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG YAN ET AL: "Preparation and Performance of the Heterostructured Material with a Ni-Rich Layered Oxide Core and a LiNi 0.5 Mn 1.5 O 4 -like Spinel Shell", APPLIED MATERIALS & INTERFACES, vol. 11, no. 18, 8 May 2019 (2019-05-08), pages 16556-16566, XP055849699, US ISSN: 1944-8244, DOI: 10.1021/acsami.9b01957 | 1-6, 8-10,15 | INV. H01M4/131 |
| A | * title, abstract; fig. 4b; page 16558 * | 7,11-14 | |
| A | CHO YONGHYUN ET AL: "Spinel-Layered Core-Shell Cathode Materials for Li-Ion Batteries", ADVANCED ENERGY MATERIALS, vol. 1, no. 5, 19 July 2011 (2011-07-19), pages 821-828, XP055849879, DE ISSN: 1614-6832, DOI: 10.1002/aenm.201100239 * the whole document * | 1-14 | |
| A | ZHANG HANLEI ET AL: "Atomic Insight into the Layered/Spinel Phase Transformation in Charged LiNi 0.80 Co 0.15 Al 0.05 O 2 Cathode Particles", THE JOURNAL OF PHYSICAL CHEMISTRY C, vol. 121, no. 3, 26 January 2017 (2017-01-26), pages 1421-1430, XP055849717, US ISSN: 1932-7447, DOI: 10.1021/acs.jpcc.6b10220 * the whole document * | 1-14 | |

TECHNICAL FIELDS SEARCHED (IPC)

H01M

-----

The present search report has been drawn up for all claims

| Place of search | Date of completion of the search | Examiner |
|---|---|---|
| Munich | 11 October 2021 | Radeck, Stephanie |

EPO FORM 1503 03.82 (P04C01)